# EUROPEAN PATENT APPLICATION

(11) **EP 1 671 931 A1**
(43) Date of publication of application: **21.06.2006**
(21) Application number: 05257727.7
(22) Date of filing: 15.12.2005
(51) Int. Cl.: C02F 1/00, A47J 31/60, G04F 1/00

(54) **Water treatment vessels and cartridges therefor**

(30) Priority: 17.12.2004 GB 0427825
(71) Applicant: STRIX LIMITED, Ronaldsway, Isle of Man IM9 2RG (GB)
(72) Inventor: Felmeri, Ian, Isle of Man IM9 1BD (GB); Scott, Michael James, Isle of Man IM9 5PH (GB)
(74) Representative: Samuels, Adrian James

(57) **Abstract**

A water treatment vessel is adapted for receiving, in use, an elapsed time indicator (112). The vessel comprises denominating means, for denominating a portion of the indicator corresponding to a desired elapsed time, so as to allow a user to see when the indicator indicates the desired elapsed time. The denominating means may comprise one or more windows (110) such that only a selected portion of the indicator is visible. The vessel is arranged to activate the indicator (112) automatically when it is installed.

## Description

The present invention relates to water treatment vessels, more particularly to domestic water treatment and storage vessels.

Water treatment vessels are widely known in which a treatment cartridge is provided in order to reduce the presence of contaminants and improve the taste and odour of water for domestic use. The vessel may simply be a jug in which the treated water is stored and from which it may be poured. The vessel may alternatively be a water heating appliance such as a kettle; or a water cooling device. An example of a cartridge which can be used in these different vessels is described in the Applicant's International Patent Application WO 2004/014519.

Wherever these cartridges are used there is a need for the user to replace them after their useful lifetime has expired. It is well known in the art, for example, to provide filter jugs with a usage indicator in which a ratchet mechanism indicates the number of times the jug has been filled. However, it is more desirable to have an indication of the time for which the cartridge has been in use because, for reasons of hygiene, the cartridge should be replaced after a certain period regardless of whether the treatment medium has been exhausted; and indeed filter jugs having an indicator of the time elapsed since the cartridge was last replaced are also known.

It has been proposed in WO 02/00552 to provide a filter cartridge with an integral indicator which shows the time elapsed since its activation. It is activated by the contact of water poured into the jug with a special dye which diffuses along a porous medium; or with a reagent which reacts with a reaction medium.

The Applicant has appreciated however that the rate of diffusion is dependent upon the temperature, and therefore that such indicators if designed for cartridges or water treatment jugs for table-top use, will not be accurate if used for a fridge jug or a kettle. The behaviour of indicators which use a chemical reaction to produce a progressive colour change is also temperature dependent. It is an object of this invention to alleviate such problems.

According to a first aspect of the invention there is provided a water treatment vessel comprising: a water treatment cartridge; an elapsed time indicator; and denominating means, separate from the indicator, for denominating a portion of the indicator corresponding to a desired elapsed time so as to allow a user to see when the indicator indicates the desired elapsed time.

The invention also extends to the vessel *per se,* without the cartridge and/or indicator fitted. When viewed from a second aspect therefore the invention provides a water treatment vessel adapted for receiving in use an elapsed time indicator; said vessel comprising denominating means, for denominating a portion of the indicator corresponding to a desired elapsed time, so as to allow a user to see when the indicator indicates the desired elapsed time.

Thus in accordance with the invention the actual elapsed time, which can conveniently correspond to the lifetime of the cartridge, can be given by cooperation between the indicator and the separate denominating means associated with the vessel that shows which part of the indicator to look at.

It will be appreciated by those skilled in the art that the separate denominating means may be designed so as to denominate a portion of the indicator means which is appropriate to the function of the vessel. In other words the cooperation between the denominating means and the indicator depends on the temperature range to which the indicator is subjected in the vessel. This accounts for the fact that, at different indicator temperatures, a different portion of the same indicator will correspond to a particular desired elapsed time because the progress of the indicator is temperature dependent. The denominating means will therefore denominate different portions of the indicator for a water heating appliance, a water cooling appliance and a room temperature water treatment jug, for example.

In particular, where a water treatment cartridge is used in vessels which operate at different temperatures, the cooperation between the separate denominating means and the indicator can ensure that an accurate indication of the lifetime of the cartridge is given. There are clear economic benefits in being able to use a common cartridge and/or indicator in a wide variety of different vessels.

The indicator may be received anywhere in or on the vessel that is visible to a user. The indicator may be received inside the vessel, especially if the vessel has one or more transparent portions. In some preferred embodiments the indicator is on a water treatment cartridge received in the vessel. This is beneficial in being convenient for the user. A water treatment cartridge may have the elapsed time indicator, attached or integral, anywhere that is visible when it is installed in the vessel. For example the indicator may be on or in the side walls of the cartridge. In preferred embodiments the indicator is on the top of the cartridge so that it may be viewed from above.

In other preferred embodiments the indicator is received on a part of the vessel separate from the cartridge. This makes it easy for a user to install and replace the indicator. The indicator may be received in or on the side walls or lid of the vessel. Alternatively it could be received on a cordless power base for the vessel. In preferred embodiments though the vessel is arranged to receive an indicator in an external handle portion. The indicator is therefore easily viewed when the vessel is in use, without the need to open the vessel in order to view the cartridge and/or indicator. Furthermore, a user is more likely to notice and pay attention to the elapsed time indicated when the indicator is in a handle portion because the handle portion is always used.

The elapsed time indicator may be of any suitable type which is temperature dependent, but preferably the indicator is of the type in which a liquid advances along a medium either by diffusion or capillary action. Preferably the advancing liquid causes an observable colour change either by diffusion of a coloured liquid or by a chemical reaction. The migration of the colour change through the medium gives a visible indication of the time elapsed. The chemical reaction may be chelation of a metal ion by a chelating agent, reaction of an acid/base with a pH indicator, reaction of an electron donor/acceptor with a redox indicator, or reaction between an enzyme and a substrate. The coloured liquid may be an edible oil with a food dye so that water in contact with the indicator remains non-toxic even in the event that the indicator becomes damaged or splits open.

Most preferably the indicator is of the type is described in WO 03/007088. A water treatment cartridge having such an indicator is novel and inventive in its own right. When viewed from a further aspect, therefore, the invention provides a water treatment cartridge having an elapsed time indicator comprising a reservoir containing a coloured indicator fluid and a migration medium, arranged such that said liquid is initially isolated from said migration medium, but on the application of pressure to the reservoir said liquid is brought into contact with the migration medium such that the liquid is caused to migrate along the migration medium, the extent of said migration giving an indication of elapsed time since activation.

Preferably a second reservoir is disposed between the first reservoir and the migration medium. Preferably the second reservoir comprises an inflatable pocket which is inflated by the liquid from the first reservoir. Further preferably the first reservoir is housed within the second reservoir. The first reservoir is preferably in a base layer of the indicator and the second reservoir is preferably in an intermediate layer located above the base layer.

In preferred embodiments the elapsed time indicator comprises a pressure-rupturable seal on the liquid reservoir, so that the indicator is activated by the simple application of pressure on the reservoir to release the liquid, e.g. into a second reservoir. The colour change produced in the indicator by migration of the liquid through the migration medium may be any visible change, but preferably it is from any other colour to red. This gives an indication of elapsed time that is easily understood by the user.

The rate of liquid migration or the rate of the reaction producing a colour change, and therefore the indication of elapsed time, depends on the temperature of the indicator. However it has been appreciated by the Applicant that the same indicator, whether or not on a cartridge, may be advantageously used with one of a variety of water treatment vessels having denominating means as described above, because the denominating means can show which portion of the indicator corresponds to the desired elapsed time (e.g. the lifetime of a cartridge) at the temperature at which the vessel operates.

The period of time taken for the colour change to migrate through the whole migration medium depends on the temperature of the indicator. Indicators are available with time periods of between thirty minutes and six months at room temperature. In preferred embodiments, at the average temperature of about 40 °C experienced by an indicator installed in a kettle, the colour change will not migrate through the whole of the migration medium until a time period of about four weeks has elapsed. At lower temperatures the colour change will migrate through less of the migration medium within the same time period. For example if used in a fridge at an average temperature of 3-5 °C it may only migrate a quarter of the full distance.

The indicator may be of any suitable size and it may be of any shape such as a triangle, rectangle, polygon, circle or part of a circle. In some preferred embodiments the indicator is in the form of a disc, e.g. suitably sized to fit in the central portion on top of a cartridge. In such embodiments the migration medium itself could be annular. Alternatively it could be in the form of a spiral track or one or more radially extending strips. In other preferred embodiments the indicator is in the form of a strip, e.g. suitably sized to fit in the handle portion of a vessel.

In some embodiments the indicator exposes a continuous portion or the whole of the migration medium in which a colour change is produced. In other embodiments the migration medium is covered with a transparent layer forming one or more windows through which the colour change is visible. Such windows may be of any suitable shape but in preferred embodiments where the indicator is disc-shaped, the windows may be concentric arcuate sections.

The denominating means may denominate a portion of the indicator by covering, filtering, selecting, adapting or otherwise interacting with the indicator. For example it could comprise a scale, frame or marker which is applied to the indicator when the latter is received in the vessel. Preferably the denominating means comprises one or more windows so that only a selected portion of the indicator is visible. As previously described the visible portion will be that which shows a colour change after the desired time has elapsed, e.g. about one month for indicating the end of a water treatment cartridge life. This gives a particularly simple yes/no indication so that when a user is able to view a colour change or other indication through the window, he or she knows that the predetermined time has elapsed and it is therefore time to change the cartridge. A functionally equivalent alternative would have a lens or other viewer focused on only the particular region of the indicator.

The denominating means may be integral with the vessel or it may be mounted on the vessel. In some preferred embodiments in which the indicator is provided on the cartridge the denominating means is preferably situated in the vessel such that a water treatment cartridge may be mounted directly beneath it. If the cartridge has an indicator on top then this arrangement allows a user to selectively view a denominated portion of the indicator from above. The vessel may have a viewing means in its walls which allow a user to view the denominating means. Preferably, however, the vessel has a lid with a viewing means, such as a window, which allows a user to view the denominating means through the lid. A user can therefore view the denominating means, and the denominated portion of the indicator when a cartridge is mounted in the vessel, through the walls or lid of the appliance even when it is in use.

In other preferred embodiments in which the indicator is separate from the cartridge the denominating means is preferably integral with a handle portion of the vessel. This arrangement allows an indicator to be received in the handle portion such that it can be viewed through the denominating means and is easily visible from the outside of the vessel by a user as previously explained. Preferably the handle portion of the vessel comprises one or more windows for denominating and selecting a portion of the indicator for viewing.

The indicator could be activated manually before being installed in the vessel. Preferably, however, the vessel is arranged to activate the indicator when it is installed, either by itself or as part of a cartridge. Where the indicator is on a cartridge this may be achieved by a cooperation between the vessel and the cartridge which produces pressure on a pressure-rupturable seal of the indicator. For example, either the cartridge or some part of the vessel may be provided with means for activating the indicator such as a protrusion, node, rib, ramp or other surface feature which is pressed against the pressure-rupturable seal of the indicator only when the cartridge is installed in the vessel.

Where the indicator is separate the means for receiving it is preferably provided with means for activating the indicator such as a protrusion, node, rib, ramp or other surface feature which is pressed against the pressure-rupturable seal of the indicator only when the indicator is installed.

Both arrangements ensure that the indicator is activated straightaway upon installation without the need for a user to remember to activate it. The activating means may be separate to the denominating means, but preferably it is integral with the denominating means.

Where provided the means for receiving an indicator preferably comprises a keying arrangement which is so shaped that an indicator may only be inserted in a particular orientation. The indicator may be asymmetrical or have some other keying feature that cooperates with the keying arrangement of the vessel. In some preferred embodiments the vessel has a channel for receiving an indicator, the channel and the indicator being so shaped that the indicator can only be fully inserted into the channel in a particular orientation. This ensures that the indication of elapsed time migrates in the correct direction along the indicator relative to the denominating means of the vessel, so that the correct elapsed time is indicated.

Certain preferred embodiments of the present invention will now be described, by way of example only, with reference to the accompanying drawings in which:
Figure 1 shows a perspective view of a water treatment cartridge having a disc-shaped elapsed time indicator on top in accordance with an embodiment of the invention;
Figure 2 shows a perspective view of a water treatment cartridge having an elapsed time indicator on top in accordance with another embodiment of the invention;
Figure 3 shows a denominating mask with a water treatment cartridge installed below for use in a water heating vessel;
Figure 4 shows a denominating mask with a water treatment cartridge installed below for use in a room temperature jug;
Figure 5 shows a denominating mask with a water treatment cartridge installed below for use in a water cooling vessel;
Figure 6 shows a section through the embodiment of Figure 3;
Figure 7 shows a detail of the section of Figure 6;
Figure 8 shows a perspective view of a handle portion of a water treatment vessel receiving an elapsed time indicator in accordance with another embodiment of the invention;
Figure 9 shows a perspective view of a handle portion of a water treatment vessel receiving an elapsed time indicator in accordance with another embodiment of the invention;
Figure 10 shows a plan view of the handle portion of Figure 9;
Figure 11 shows a section through the handle portion of Figure 10 and a detail of the section; and
Figure 12 shows an elapsed time indicator installed in a handle portion of a) a water heating vessel, b) a room temperature water treatment vessel, and c) a water cooling vessel.

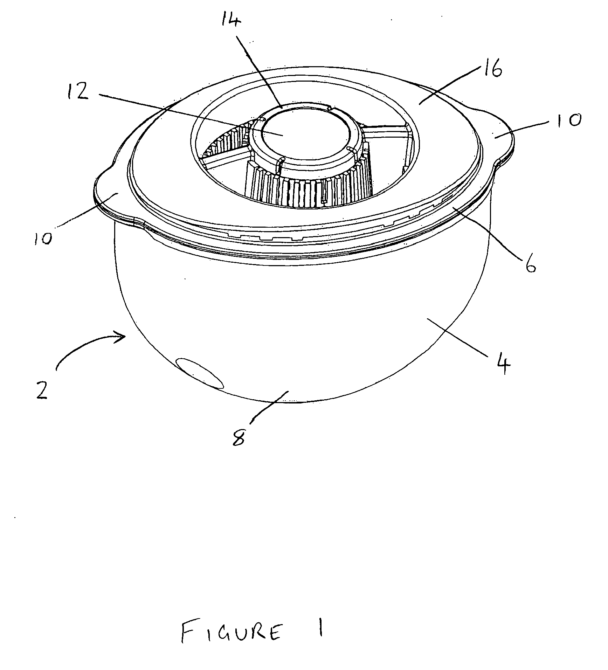

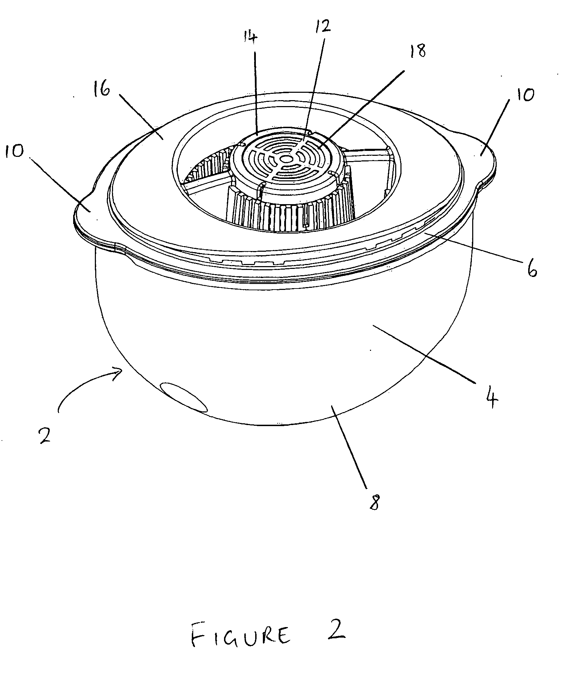

With reference to Figures 1 and 2, a water treatment cartridge 2 comprises a body 4 which contains a mass of water treatment granules (not shown). The granules may comprise ion exchange particles, activated carbon particles, minerals, other treatment materials or mixtures thereof. The cartridge body 4 is generally elliptical in cross-section, tapering in an arcuate manner from its upper end 6 to its lower end 8. The upper end 6 of the cartridge body 4 is provided with two mounting lugs 10. As described in WO 2004/014519, these mounting lugs 10 are shaped so as to cam the cartridge into position when it is mounted in a water treatment vessel. Although the cartridge is shown with mounting lugs, these may be omitted and the cartridge may be of any shape suitable for installing it in a particular vessel.

An elapsed time indicator disc 12 is recessed in the central surface 14 of the cartridge cap 16. As shown in Figure 1 the indicator disc 12 may comprise a transparent cover through which the migration medium is visible. The indicator 12 may alternatively comprise one or more arcuate windows 18 through which regions of the migration medium are visible, as can be seen from Figure 2.

The indicator 12 may be of a type having a pressure-rupturable seal on the liquid reservoir. The indicator 12 may be activated by breaking this seal as will be explained below. After activation a colour change progresses as a visible front expanding from the centre towards the periphery of the disc 12. In the embodiment shown in Figure 2 the colour change becomes progressively visible through each of the annular window sections 18 as it spreads outwardly.

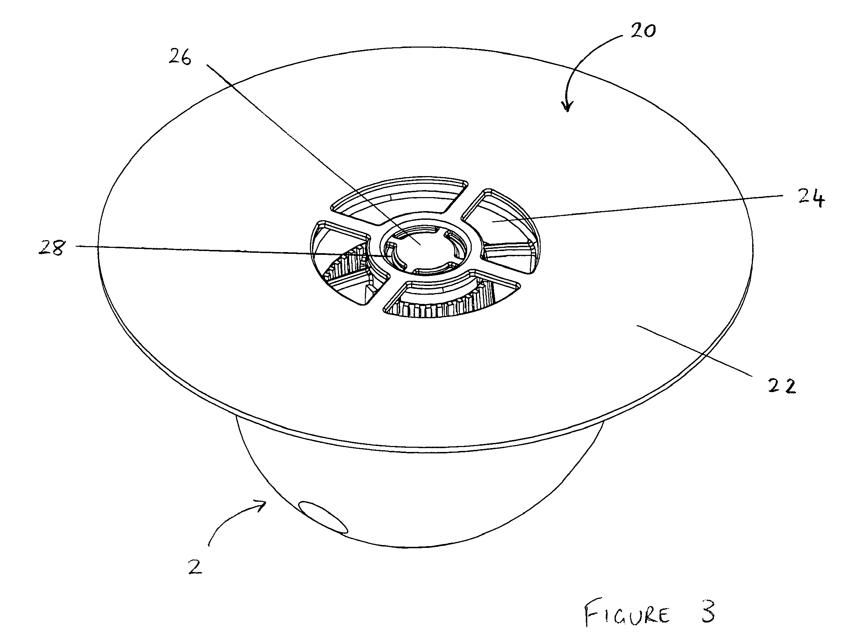

As can be seen from Figures 3, 4 and 5, a water treatment cartridge such as those shown in Figures 1 and 2 can be mounted in a water treatment vessel (not shown in full) underneath a denominating mask which forms the base of a hopper for untreated water. As can be seen in Figure 3, the mask 20 comprises an outer portion 22 which forms the base of the hopper inside a water treatment vessel and one or more openings 24 to allow the flow of water into a cartridge 2 installed below. The mask 20 has a central disc 26 which fits over the indicator of the cartridge 2. The central disc 26 is provided with four windows 28 in the form of arcuate slots each of which allows a user to selectively view a portion of the indicator denominated by the mask 20. The user is advantageously able view the windows 28 through a transparent part of a lid of the vessel so that the selected portion/s of the indicator are visible even when the vessel is in use.

The denominating mask 20 shown in Figure 3 is designed for a water heating vessel such as a kettle. The windows 28 are positioned relatively close to the periphery of the disc 26 because the rate of migration of colour change in an indicator is greater at elevated temperatures. The windows 28 are positioned so as to denominate a portion of the indicator which will display a colour change after about four weeks of normal use of the vessel in which the indicator will frequently be subjected to hot steam.

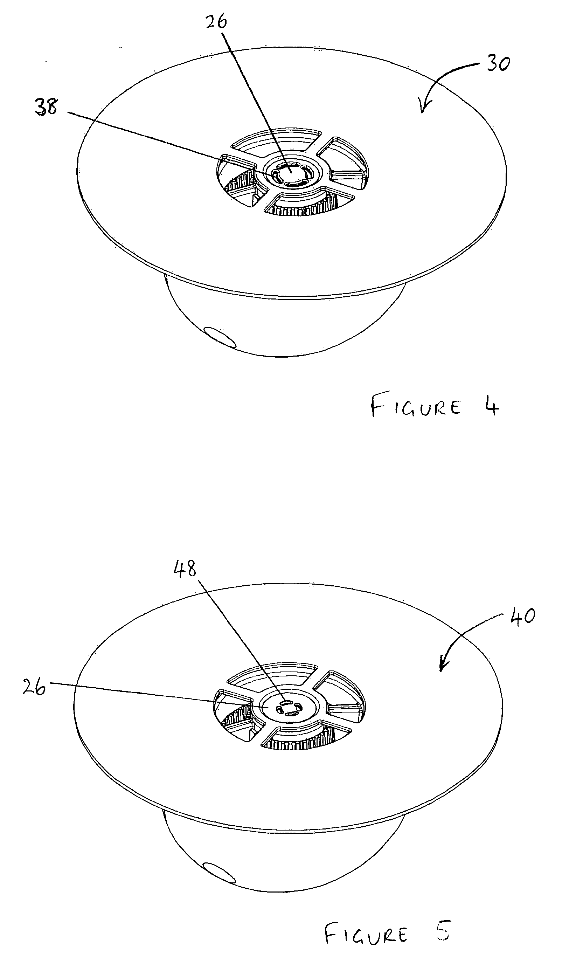

The denominating mask 30 shown in Figure 4 is designed for a room temperature water treatment jug. This is similar to the previous mask 20 except that the arcuate slot windows 38 are positioned at an intermediate radius from the centre of the disc 26 in accordance with the expected rate of migration of colour change in an indicator at room temperature. The windows 38 are positioned so as to denominate a portion of the indicator which will display a colour change after about four weeks at room temperature.

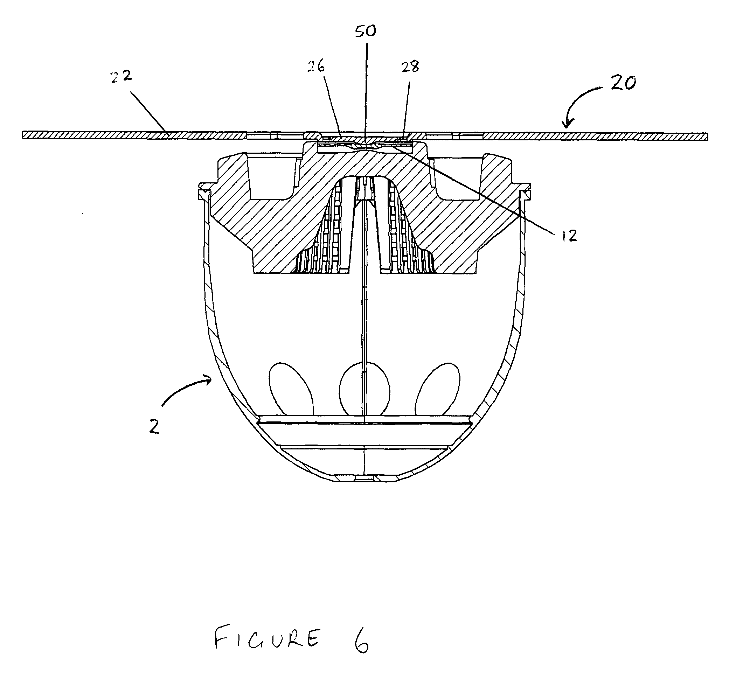

The denominating mask 40 shown in Figure 5 is designed for a water cooling vessel. Again the mask is the same as in previous embodiments except that the windows 48 are positioned relatively close to the centre of the disc 26 because the rate of migration of colour change in an indicator is slower at low temperatures. The windows 28 are positioned so as to denominate a portion of the indicator which will display a colour change after about four weeks of use in a vessel which cools water to a temperature of about 3-5 °C.

Thus it will be appreciated that the same type of cartridge having a time indicator can be mounted in any kind of water treatment vessel and still accurately indicate a desired elapsed time (typically four weeks for replacement of a standard water treatment cartridge) regardless of the temperatures to which the indicator is exposed in the vessel. This is because each vessel has a denominating mask, such as those described with reference to Figures 3, 4 and 5, which denominates a different portion of the indicator corresponding to the desired elapsed time when used in that vessel.

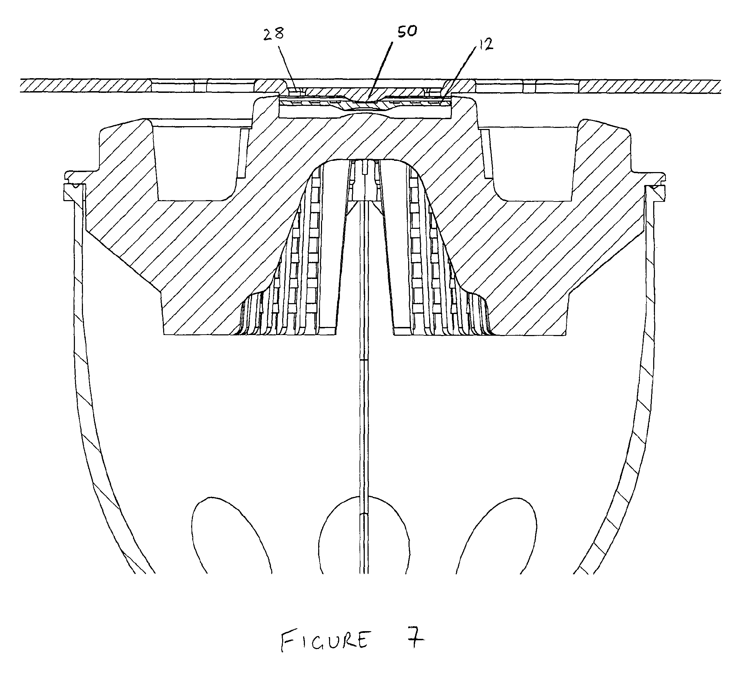

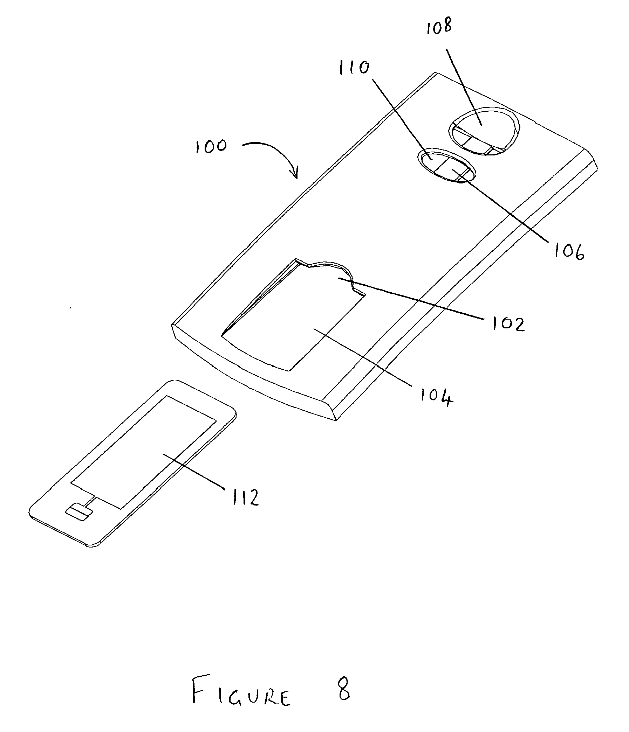

The indicator 12 may be activated by a cooperation between the cartridge 2 and denominating mask 20 as best seen from Figures 6 and 7 which are sections through the embodiment of Figure 3. In this embodiment the denominating mask 20 has a button 50 moulded on the underside of the central disc 26. When the cartridge 20 is installed into the vessel, the indicator 12 on its top surface is brought into contact with and pressed up against the button 50 such that the seal of the liquid reservoir is ruptured and the indicator is activated. There are many other possible ways in which the cartridge and vessel could cooperate to activate the indicator on installation.

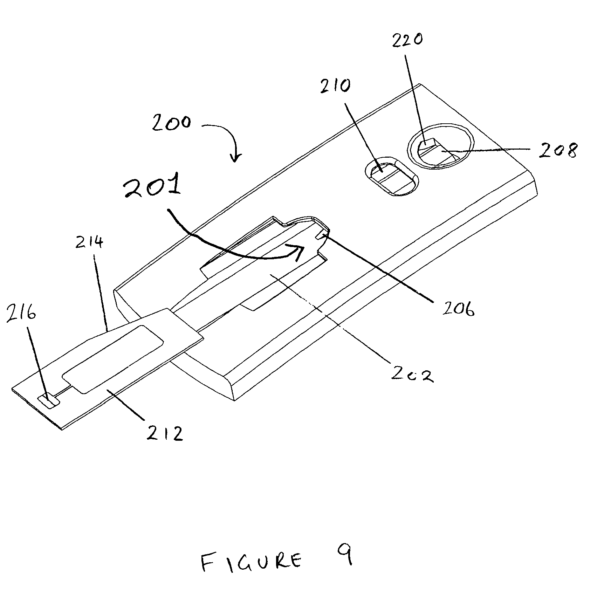

Referring now to Figures 8-12 there will be described a handle portion of a water treatment vessel for receiving a separate elapsed time indicator.

Figure 8 shows a handle portion 100 having a longitudinal internal channel 102 into which an elapsed time indicator strip 112 can be inserted via opening 104. The channel 102 has a longitudinal rib 106 raised from its lower surface. The indicator strip 112 is inserted into the channel 102 by sliding it into the opening 104 and along the lower surface of the channel into the handle portion. As the indicator strip 112 is slid into position over the rib 106, the pressure applied by the raised rib 106 ruptures the seal of the dye reservoir and activates the indicator. Once activated, dye advances down the length of the indicator strip 112. A window 110 allows a user to view a predetermined portion of the strip corresponding to the desired elapsed time, e.g. about four weeks for the life time of a water treatment cartridge. When the coloured dye has migrated along the strip 112 to become visible through the window 110, the user knows that it is time to change the cartridge.

The handle portion 100 has an aperture 108 at the opposite end to the channel opening 104 which allows a user to see when an indicator strip 112 has been pushed fully into the channel 106. The aperture 108 is large enough that a user can apply finger pressure to the end of the indicator strip 112 to aid its removal when it needs to be replaced. A new indicator strip can then be slid into the channel and is immediately activated as described above.

An alternative embodiment is shown in Figure 9 in which a handle portion 200 of a water treatment vessel receives an indicator strip 212 which has a key shape 214. The key shape 214 is located at the opposite end of the indicator strip 212 to the dye migration starting point 216, and ensures that the indicator strip is inserted in the correct direction. A corresponding key shape 220 is provided at the end of the strip -receiving channel 201. The handle portion 200 has a groove 202 in the channel 201 for receiving and accommodating the dye reservoir of the indicator strip 212. A window 210 allows a user to view a portion of the inserted indicator 212 and an aperture 208 allows a user to push the indicator strip 212 out of the handle when it needs replacing.

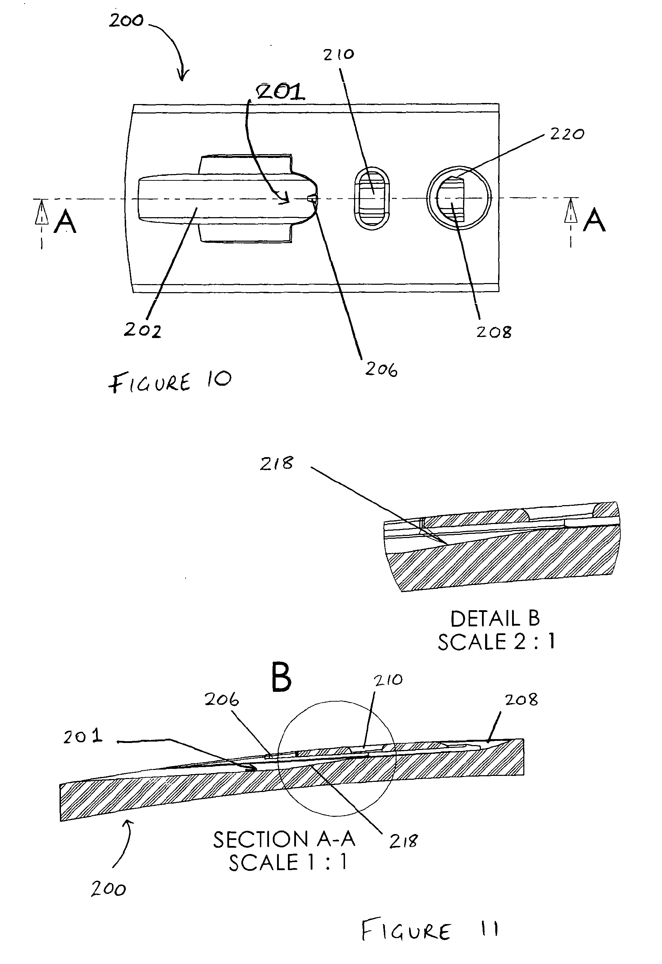

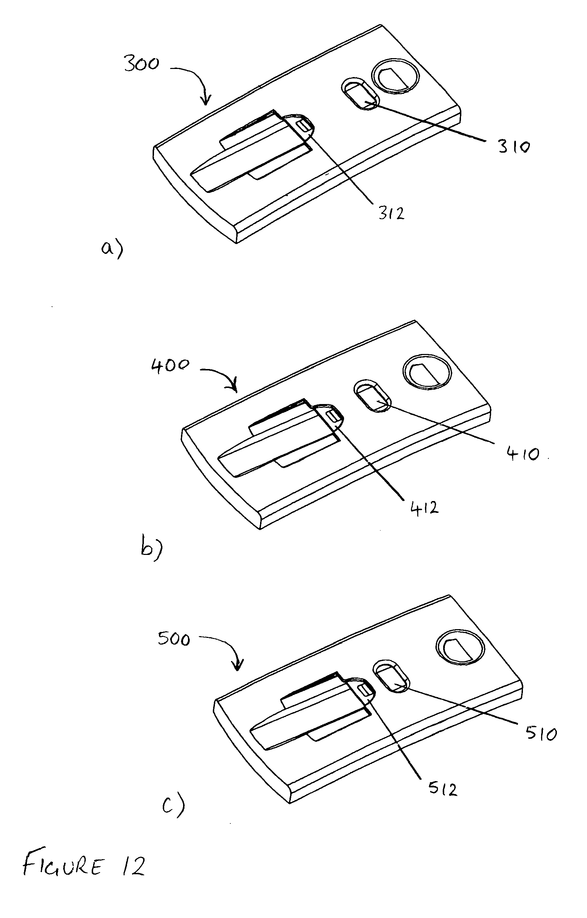

The channel 201 is provided with a triggering feature 206 in the form of a pointer. As can be more clearly seen in Figures 10 and 11, the pointer 206 is located at the top of the channel 201 and the channel beyond the pointer 206 has a ramped portion 218 such that the channel narrows beyond the pointer 206. When an indicator strip 212 is inserted into the handle portion 200 by sliding it along and into the channel 201, the pressure on the strip 212 from the narrowing of the channel together with the pressure from the pointer 206 activates the indicator by rupturing the dye reservoir seal. Dye then starts to migrate along the strip 212 from the starting point 216. The corresponding key shape 220 at the end of the channel 202 ensures that the indicator strip 212 can only be fully inserted and activated when in its correct orientation. This ensures that dye migrates along the strip 212 from the starting point 216 towards the window 210 and towards the end aperture 208 of the handle portion 200.

Figure 12 shows how the position of the denominating window along the handle portion varies depending on the function of the vessel. In Figure 12 a) the handle portion 300 has a window 310 positioned near to the end of the inserted indicator strip 312. This arrangement is suitable for a water heating vessel in which the handle portion 300 will frequently be subjected to hot steam so the migration of dye along the indicator 312 will be relatively fast.

The handle portion 400 shown in Figure 12 b) is suitable for a room temperature water treatment vessel. The window 410 is positioned so as to denominate a portion of the indicator strip 412 about half way along the strip.

The handle portion 500 shown in Figure 12 c) is suitable for a water cooling vessel such as a fridge jug. The window 510 is positioned so as to denominate a portion of the indicator strip 512 only about quarter of the way along the strip because the rate of dye migration will be relatively slow at typical refrigerator temperatures of 3-5°C.

In various of the embodiments described above the cartridge 2 has a disc-shaped indicator 12 attached to the central surface 14 of the cartridge cap 16. However it will be appreciated that the indicator is not limited to being a disc and may be of any shape as required or suitable for a particular cartridge. For example the indicator could be a strip. Conversely, the handle portion in various of the other embodiments described is not limited to having a longitudinal channel for receiving an indicator strip, but could have any kind of aperture, channel, recess or other means for accepting an indicator of any shape. For example the indicator could be disc-shaped and the handle portion could have a semi-circular slot for receiving the indicator.

The denominating means of the vessel is not limited to a window and could alternatively provide a scale or other markings which allow a user to see when the desired elapsed time is indicated. For example an indicator could simply be fitted into a recess on a handle or other portion of the vessel alongside which a time-scale is marked and against which the progress of dye in the indicator can be compared and measured. It will be appreciated that the denominating mask for use with a water treatment cartridge having an indicator in accordance with the invention is not limited to the circular form shown with arcuate windows and could, for example, comprise a single circular or rectangular window, or a series of windows spaced along an indicator strip.

## Claims

1. A water treatment vessel comprising: a water treatment cartridge; an elapsed time indicator; and denominating means, separate from the indicator, for denominating a portion of the indicator corresponding to a desired elapsed time so as to allow a user to see when the indicator indicates the desired elapsed time.

2. A water treatment vessel adapted for receiving in use an elapsed time indicator; said vessel comprising denominating means, for denominating a portion of the indicator corresponding to a desired elapsed time, so as to allow a user to see when the indicator indicates the desired elapsed time.

3. A water treatment vessel as claimed in claim 1 or 2, wherein the indicator is provided on the or a water treatment cartridge received in the vessel.

4. A water treatment vessel as claimed in claim 3, wherein the indicator is provided on the top of the cartridge.

5. A water treatment vessel as claimed in claim 1 or 2, wherein the indicator is provided on a part of the vessel separate to the or a water treatment cartridge.

6. A water treatment vessel as claimed in claim 5, wherein the vessel is arranged to receive an indicator in an external handle portion.

7. A water treatment vessel as claimed in any preceding claim, wherein the indicator is in the form of a strip.

8. A water treatment vessel as claimed in any preceding claim, wherein the denominating means comprises one or more windows such that only a selected portion of the indicator is visible.

9. A water treatment vessel as claimed in any preceding claim , wherein the denominating means is situated on or in the vessel such that the or a water treatment cartridge may be mounted directly beneath it.

10. A water treatment vessel as claimed in any preceding claim, wherein the vessel has a lid with a viewing means which allows a user to view the denominating means through the lid.

11. A water treatment vessel as claimed in any preceding claim, wherein the denominating means is integral with a handle portion of the vessel.

12. A water treatment vessel as claimed in any preceding claim, wherein the vessel is arranged to activate the indicator automatically when it is installed.

13. A water treatment vessel as claimed in any preceding claim, wherein the vessel or cartridge is provided with means for activating the indicator which presses against a pressure-rupturable seal of the indicator only when the indicator or cartridge is installed.

14. A water treatment vessel as claimed in claim 12 or 13, wherein the activating means is integral with the denominating means.

15. A water treatment vessel as claimed in any preceding claim, wherein the vessel is provided with means for receiving an indicator and said means for receiving comprises a keying arrangement which is so shaped that an indicator may only be inserted in a particular orientation.

16. A water treatment vessel as claimed in any preceding claim, wherein the vessel has a channel for receiving an indicator, the channel and the indicator being so shaped that the indicator can only be fully inserted into the channel in a particular orientation.

17. A water treatment vessel as claimed in any preceding claim, wherein the indicator is of a type in which a liquid advances along a medium.

18. A water treatment vessel as claimed in claim 17, wherein the advancing liquid causes an observable colour change.

19. A water treatment vessel as claimed in claim 18 wherein, at an average temperature of about 40 °C, the colour change will not migrate through the whole of the medium until a time period of about four weeks has elapsed.

20. A water treatment vessel as claimed in any preceding claim, wherein the elapsed time indicator comprises a reservoir containing a coloured indicator fluid and a migration medium, arranged such that said liquid is initially isolated from said migration medium, but on the application of pressure to the reservoir said liquid is brought into contact with the migration medium such that the liquid is caused to migrate along the migration medium, the extent of said migration giving an indication of elapsed time since activation.

21. A water treatment cartridge having an elapsed time indicator comprising a reservoir containing a coloured indicator fluid and a migration medium, arranged such that said liquid is initially isolated from said migration medium, but on the application of pressure to the reservoir said liquid is brought into contact with the migration medium such that the liquid is caused to migrate along the migration medium, the extent of said migration giving an indication of elapsed time since activation.

22. A water treatment vessel or a water treatment cartridge as claimed in claim 20 or 21, wherein a further reservoir is disposed between said reservoir and the migration medium.
